# EUROPEAN PATENT APPLICATION

(11) **EP 2 101 161 A1**
(43) Date of publication of application: **16.09.2009**
(21) Application number: 08462002.0
(22) Date of filing: 13.03.2008
(51) Int. Cl.: G01J 11/00, H01S 3/098, H01S 3/13

(54) **Bandwidth-independent method and setup for measuring and stabilizing the carrier-envelope phase drift of laser pulses**

(71) Applicant: Szegedi Tudomanyegyetem, 6720 Szeged (HU)
(72) Inventor: Görbe, Mihály, 6000 Kecskemét (HU); Osvay, Károly, 6725 Szeged (HU)
(74) Representative: Szabo, Zsolt

(57) **Abstract**

According to the invention, a laser pulse train consisting of at least two laser pulses (1,2,3,4,5,6) is fed into a light path extending between a starting and an end point, and a resonator ring (37) is inserted into the light path at a first point (BS₁) differing from the end point, which ring closes into itself at said first point (BS₁). The length of the resonator ring (37) essentially equals to the product of the separation length between subsequent laser pulses and a rational number in the form of n/m (n and m are positive integers). After dividing the laser pulses that reached the first point (BS₁), a predefined fraction of said laser pulses is directed into the resonator ring (37) and is guided along it. The remaining fraction of the laser pulses divided at the first point (BS₁) is guided into a segment of the light path that falls beyond the first point and is led to the end point. A detector (35) is arranged at the end point and a physical quantity peculiar to the superposition of the electric fields of the laser pulses guided to the end point is determined by said detector. Finally, the pulse-to-pulse drift of carrier-envelope phase for subsequent laser pulses is determined from the variation of the physical quantity obtained in this manner.

## Description

The present invention relates to a method for the bandwidth-independent measurement of the carrier-envelope phase-drift of subsequent laser pulses by means of multiple-beam interferometry and, on this basis if desired, for the stabilization thereof. The present invention also relates to a setup for accomplishing the method.

A momentous portion of the basic physical, biological and chemical processes of the real world surrounding us takes place on the atto- and/or femtosecond time scale (10⁻¹⁸ to 10⁻¹⁵ s). The resolving power of electronical scientific-technical devices falls behind this with several orders of magnitude. As a result of recent developments in the field of laser techniques, however, such laser pulses can be generated nowadays which also enable the experimental study of said elementary processes. Such a laser pulse can be considered as a wave packet, it disperses during propagation and in accordance with Fourier's theorem, the shorter in time it is, the larger bandwidth it possesses, i.e. the more frequencies are present therein. In parallel, for such a laser pulse the coherence length is also getting shorter and shorter. Due to the large bandwidth and the dispersive behaviour of materials and various optical devices, the approach of slowly changing carrier-envelope applied in general does not hold for said short laser pulses or it holds but with essential restraints.

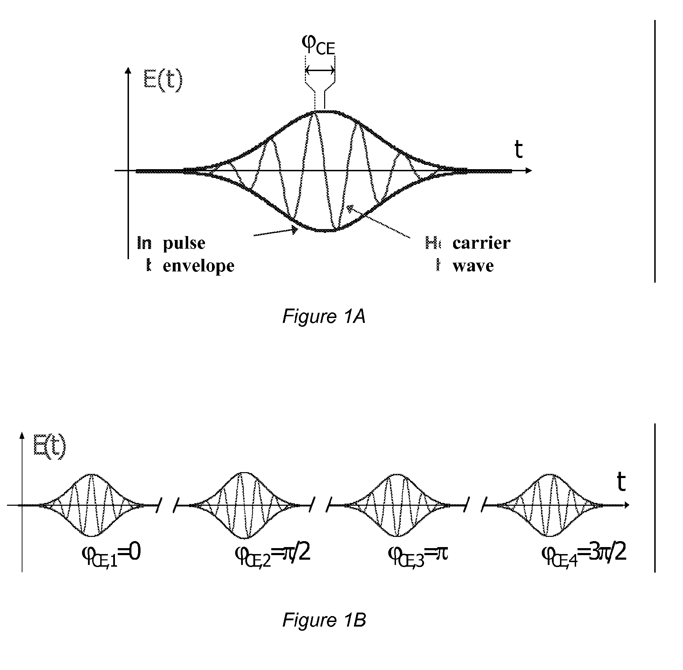

By definition, the carrier-envelope phase (CE phase, ϕ_{CE}) - as is illustrated in Figure 1A - gives the extent to which the phase of the carrier wave is ahead of the peak of the envelope. The carrier-envelope phase of pulse trains generated by lasers of relatively short pulses has a slippage from pulse to pulse (CE phase drift). Theoretically, the phase always changes to the same extent. For illustration purposes, Figure 1B shows a pulse train with a carrier-envelope phase-drift Δϕ_{CEO} of π/2. In the literature, it is also called carrier-envelope offset phase.

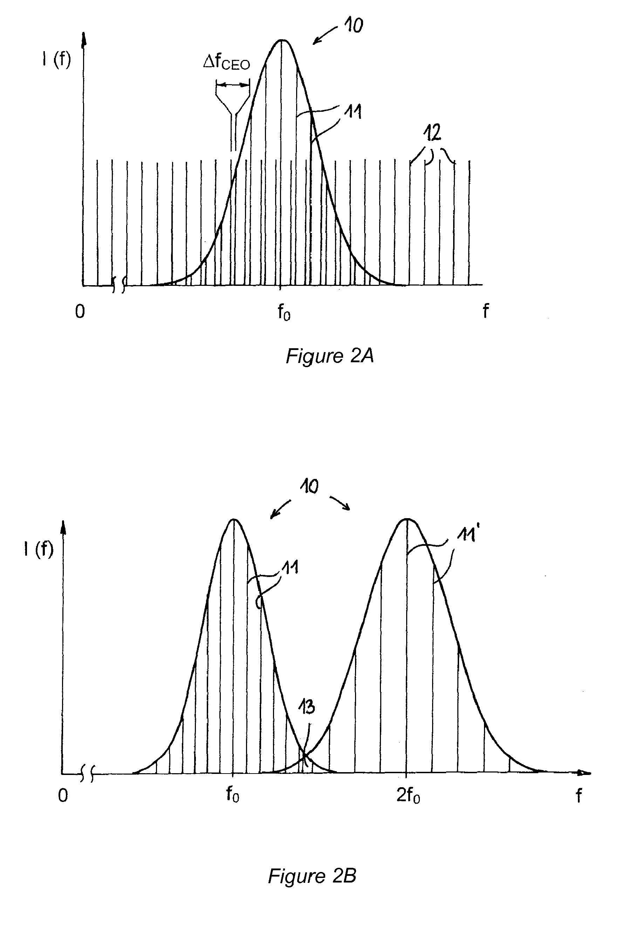

Nowadays, the so-called "f-to-2f" technique is used to detect the carrier-envelope phase drift and to control the phase stabilization of laser pulse trains. The basis for this technique is that if the carrier-envelope phase drifts, the spectrum of the laser is shifted relative to the longitudinal modes of the resonator. If the carrier-envelope phase changes from pulse to pulse exactly by Δϕ_{CEO}, the offset of frequencies present in the spectrum (that is, of the so-called frequency comb) relative to the longitudinal modes (that is, the so-called carrier-envelope offset, Δf_{CEO}) will be constant in time and is directly proportional to Δϕ_{CEO}, as is shown in Figure 2A.

According to the "f-to-2f" technique, the interaction between the laser pulses of the pulse train and their second harmonics (i.e. the frequency-doubled pulses) is investigated. Due to the interaction, a beating with frequency Δf_{CEO} can be observed between the low-frequency portion of the second harmonic spectrum and the highfrequency portion of the original spectrum, as is shown in Figure 2B. The Δf_{CEO} frequency of the beating falls within the radiofrequency range (that is, it has typically a magnitude of several MHz). The carrier-envelope phase-drift of laser pulses can be deduced from the measurement of this frequency. Moreover, it can be stabilized based on the measurement.

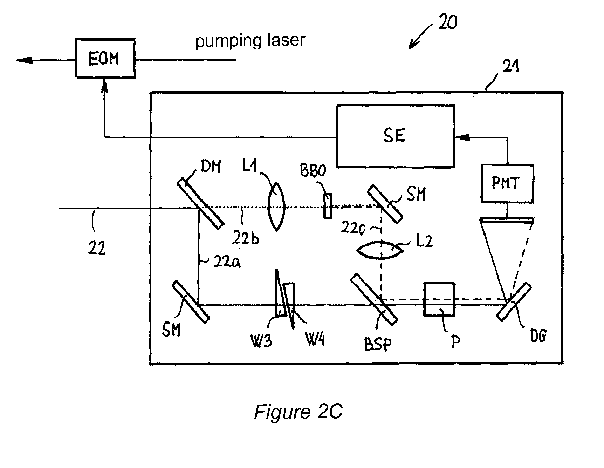

If the beating frequency is kept at a constant value (for instance, either by rotating the closing mirror of a prism compressor in the laser source or by modulating the power of the pumping laser, illustrated in Figure 2C), Δϕ_{CEO}, i.e. the carrier-envelope phase-drift will also be constant. If said constant drift is equal to 2π/m, where m is a positive integer, every m-th member of the pulse train will have the same carrier-envelope phase. A pulse train with this feature is called to be phase stabilized. A detailed discussion of the "f-to-2f" technique can be found e.g. in Few cycle laser pulse generation and its applications (Topics in Applied Physics, Vol. 95; editor: F. X. Kärtner; published by Springer (2004)).

Such an "f-to-2f" technique and an appropriate apparatus for realizing the technique in practice, based on spectral interferometry, are disclosed e.g. by U.S. Patent No. 6,850,543 B2.

A further method based also on the "f-to-2f" technique is described by Etienne Gagnone, Isabell Thomann, Ariel Paul, Amy L. Lytle, Sterling Backus, Margaret M. Murnane, Henry C. Kapteyn and Arvinder S. Sandhu in their work entitled Long-term carrier-envelope phase stability from a grating-based, chirped pulse amplifier [Opt. Letters 31, pp. 1866-1868 (2006)]. According to the method concerned, the visibility of spectral interference fringes is detected by means of spectral interferometry, from which the noise of carrier-envelope phase-drift is deduced. It should be emphasized, however, that this method is based on light signals generated by a non-linear process and on an "f-to-2f" interferometry exploiting said light signals.

The major drawback of the carrier-envelope phase stabilizing methods based on the "f-to-2f" technique comes from the fact that the wavelength range (or bandwidth) of the laser light source to be stabilized should be at least of an octave in width; if this condition does not hold, the bandwidth must be broadened by a suitable non-linear optical technique (e.g. in a photonic fiber). Due to the losses, however, for this purpose it is a must to operate the laser source to be stabilized at a high light intensity and to make use of (generally non-linear) optical elements capable of broadening the wavelength range, which in certain cases considerably increases the manufacturing costs and the complexity of the appropriate setup.

A yet further method for stabilizing the carrier-envelope phase of ultrafast laser pulses and a setup suitable for carrying out the method are disclosed by International Publication Pamphlet No. WO 2006/008135 A2. According to the method, which is also known as a "0-to-f" technique, the laser pulses are coupled into a single peculiar non-linear optical medium, wherein said pulses undergo self phase modulation and difference frequency generation taking place simultaneously. The laser pulses leaving the non-linear optical medium have a broad frequency range and experience group delay dispersion. To compensate the latter, the laser pulses have to be led through a series of suitable optical elements, the application of which also considerably increases the manufacturing costs and complexity of the suitable setup.

The two basic physical limitations of the method concerned are that on the one hand the spectrum of the laser pulses to be stabilized should be at least of an octave in width, and on the other hand, to perform the measurement, a considerable amount of energy of the pulses is required.

According to a possible further solution, the carrier-envelope phase-drift (or change) of the laser to be stabilized can be synchronized to the phase shift of an external optical resonator, as it can be found e.g. in the work of R.J. Jones, I. Thomann and J. Ye, entitled Precision stabilization of femtosecond lasers to high finesse optical cavities [Phys. Rev. A 69, 051803(R), (2004)]. Here, the pulse train to be stabilized is guided through a suitable electro-optical modulator, which results in a broadening of the constituent parts (i.e. the "teeth", see Figure 2B) of the frequency comb of the pulses. The laser pulses generated in this manner are fed into the laser resonator, and the intensity of the beating frequency is measured in the reflected light, which is regarded as an electromagnetic oscillation, by the so-called Pound-Drever-Hall technique. According to the statement of the authors, to achieve synchronization, laser mirrors with specific dispersion-control and low loss in wide spectral range should be applied, which considerably reduces widespread applicability of the solution. Moreover, the method is relatively complicated in practice and suitable merely for the stabilization of the carrier-envelope phase at an unknown value, while it is inadequate to measure the carrier-envelope phase itself.

It is well-known, that laser resonators used to generate relatively short pulses do have a well-defined phase shift (which results in the change of the carrier-envelope phase of the emitted pulse train), whose knowledge is indispensable for the evaluation of certain measurements, to perform an appropriate correction of the experimental results. An exact knowledge of this carrier-envelope phase-drift resulting from the phase shift of the laser resonator is especially demanded in those cases where relatively long, e.g. several-hour-lasting measurements/experiments are being performed.

A method and a setup for detecting and stabilizing the carrier-envelope phase-drift of a laser pulse train is discussed by the authors K. Osvay, M. Görbe, Ch. Grebing and G. Steinmeyer in a work entitled A bandwidth-independent linear method for detection of the carrier envelope offset phase [Opt. Letters 32, pp. 3095-3097 (2007)]. Accordingly, the carrier-envelope phase-drift is detected by means of spectrally and spatially resolved interferometry through the study of the visibility - or more precisely the change of visibility - of interference fringes obtained preferably by a Mach-Zehnder interferometer, without any kind of non-linear optical conversion. For a practical usage of the method concerned, a resonator ring is inserted into an arm of a two-beam interferometer and a laser pulse train to be studied is guided through the arms, used as optical paths, of the interferometer. The laser pulses propagating in the arm of the interferometer without the resonator ring, considered as reference pulses, are individually summed with replica pulses of the ring resonator, whereby single interferograms are produced. Here, the final interferogram is produced by a superposition of the aforementioned single interferograms. A drawback of this method is that the visibility of the fringes of the captured interferograms is not a monotone function of the intensity of the laser pulses leaving the ring resonator: said visibility is maximal if the intensities of the laser pulses coming from the arms of the applied interferometer are equal to one another and lower in any other cases. Hence, maximizing the visibility does not always lead to the minimization of the carrier-envelope phase-drift. A further disadvantage of the solution is that a relatively spacious and costly interferometer is required for the examination of the visibility used for detecting the carrier-envelope phase-drift.

The object of the present invention is to elaborate a more developed, novel technique as a possible alternative to the prior art phase stabilization methods discussed above for the measurement and, if desired, for the stabilization of the carrier-envelope phase drift based on the measurement, that also eliminates or at least moderates the drawbacks of the existing solutions. In particular, the object of the present invention is to develop a method that can be successfully applied for both the measurement and then based on the measurement - if desired - for the stabilization of the carrier-envelope phase-drift of a pulse train, wherein the pulse train is generated by a laser source operating at an arbitrary central wavelength, with arbitrary bandwidth, as well as with arbitrary light intensity. A further object of the invention is to establish a method and also to provide a setup for the measurement of the carrier-envelope phase-drift of laser pulse trains which are essentially based on linear optical processes, are relatively simple, do not request the usage of complicated additional means (e.g. interferometers) requiring professional skills, and in addition, has relatively low expenditure.

From our investigations we have concluded that the alteration in the visibility of the fringes in the spectrally and spatially resolved interferograms captured by the method as described in the aforementioned publication is caused by the overall alteration in intensity of the pulse train that underwent an interference within the resonator ring and leaves it; this overall alteration in intensity can be originated in the carrier-envelope phase-drift of the subsequent laser pulses. That is, as a result of an internal interference within the resonator ring, the intensity of the laser pulses exiting the resonator ring properly characterizes the carrier-envelope phase-drift of the laser pulse train. Thus, instead of the cumbersome and in certain cases even non-reliable detection based on the visibility, the carrier-envelope phase-drift can be exactly measured, and also controlled based on the measurement perfomed, through measuring a resultant intensity of the superposition of the electric fields of the laser pulses.

Accordingly, the object related to the accomplishment of a method for measuring the carrier-envelope phase-drift of a pulse train is achieved by elaborating the method in accordance with Claim 1. Possible preferred embodiments of the inventive method are set forth in Claims 2 to 11. The object related to the accomplishment of a setup for measuring the carrier-envelope phase-drift of a pulse train is achieved by elaborating the setup in accordance with Claim 12. Possible preferred embodiments of the inventive setup are set forth in Claims 13 to 18.

The method and the setup according to the invention are suitable for (i) measuring the carrier-envelope phase-drift (that is its rate of change) of subsequent pulses of a laser pulse train, as well as, if desired, for (ii) stabilizing the carrier-envelope phase-drift of said pulse train by means of controlling appropriate optical elements and thereby for keeping the carrier-envelope phase of laser pulses having initially a varying carrier-envelope phase (from now on, laser pulses with no phase stabilization) at a constant value, that is, for generating a phase stabilized pulse train by means of a simple intensity measurement and with the application of no interferometers.

In what follows, the invention is discussed in more detail with reference to the attached drawings, wherein
- Figure 1A shows the definition of the carrier-envelope phase;
- Figure 1B illustrates schematically a laser pulse train with a carrier-envelope phase-drift of Δϕ_{CEO}=π/2;
- Figures 2A and 2B represent the basic concept of the "f-to-2f" technique known and widespread applied;
- Figure 2C illustrates the sketch of a setup accomplishing the "f-to-2f" technique and applied in practice;
- Figure 3 shows a schematic diagram of a possible embodiment of the inventive setup;
- Figure 4 represents the temporal shape of the electric field of three subsequent laser pulses, as well as the result of their superposition ("sum") for a carrier-envelope phase-drift of 0, π/6 and π/3, respectively;
- Figure 5A illustrates the optical transmission of the resonator ring shown in Figure 3 as a function of the carrier-envelope phase-drift for different feedback values;
- Figure 5B illustrates the optical transmission of the resonator ring shown in Figure 3 as a function of the wavelength for a slightly detuned (Δτ = 0.0833 ps) resonator ring at different values of the carrier-envelope phase-drift;
- Figure 6 represents the minima and maxima of the optical transmission of the resonator ring shown in Figure 3 as a function of the relative length (that is, expressed as the length of the laser resonator) of the resonator ring; and
- Figure 7 shows the block diagram of a possible embodiment of a system according to the inventive concept and capable of phase stabilization.

Figures 2A and 2B illustrate the basic concept underlying the "f-to-2f" technique, wherein the spectrum (or the frequency comb) 11 of a laser pulse 10 is offset relative to the longitudinal modes 12 of the laser resonator to an amount of Δf_{CEO} that is proportional to the migration of the carrier-envelope phase. To put this in another way, at the overlapping 13 between the original 11 and the doubled spectra 11' of the laser pulse 10 the difference between the comb frequencies is equal to Δf_{CEO}; hence (when monitored e.g. by a photodiode) a beating with the same frequency can be observed there.

Figure 2C illustrates a prior art measuring setup 20 for accomplishing the "f-to-2f" technique, wherein the laser source (not shown) is driven by a pumping laser, the pumping beam of which is guided through an electro-optical modulator EOM. The laser pulses 22 leaving the laser source enter an (f-to-2f) interferometer 21 known by the person skilled in the art, wherein the pulses 22 are decomposed into a farther infrared beam 22b and a nearer infrared beam 22a by a dichroic mirror DM. A beam 22c characterized by the second harmonic frequency comb representing the basis for the "f-to-2f''' technique is generated by a frequency doubling crystal BBO arranged in the path of the beam 22b. Then, beams 22a, 22c fall onto a diffraction grating DG through suitable optical elements and are spectrally decomposed by means of diffraction. Having been absorbed by a suitable device, the interference of their overlapping constituent spectral parts creates photoelectrons with the beating frequency of Δf_{CEO}. The photoelectrons then enter a photomultiplier PMT and generate an electrical signal, which falls within the range of radio frequencies. This electric signal is measured directly by an oscilloscope or a similar instrument, that is, the carrier-envelope offset frequency is determined. The carrier-envelope phase-drift of the pulse train generated by the laser oscillator is stabilized in such a way, that an electro-optical modulator EOM driven by the servo electronics SE using the electronic signal (or a fraction of it) of the photomultiplier PMT controls the intensity of the pumping laser and hence the carrier-envelope phase-drift.

Upon their propagation along appropriate light paths, beams 22a, 22b and 22c pass through lenses L1 and L2, beam deflecting mirrors SM, wedges W3 and W4, a beam splitter BSP and a polarizer P. The value of carrier-envelope phase-drift is adjusted by the wedge-pair W3 and W4. In glass forming the material of the wedge-pair W3 and W4 the carrier wave of the light pulse propagates with the phase velocity, whilst the envelope moves with the group velocity. Since these velocities are not equal, the carrier wave is "shifted along" the envelope by propagating through the wedges W3 and W4. Pushing in and pulling out one of the constituting elements W3 and W4 of the wedge pair increases or decreases the path of the light within the glass, consequently the carrier-envelope phase-drift caused by the wedge can be increased or decreased, respectively.

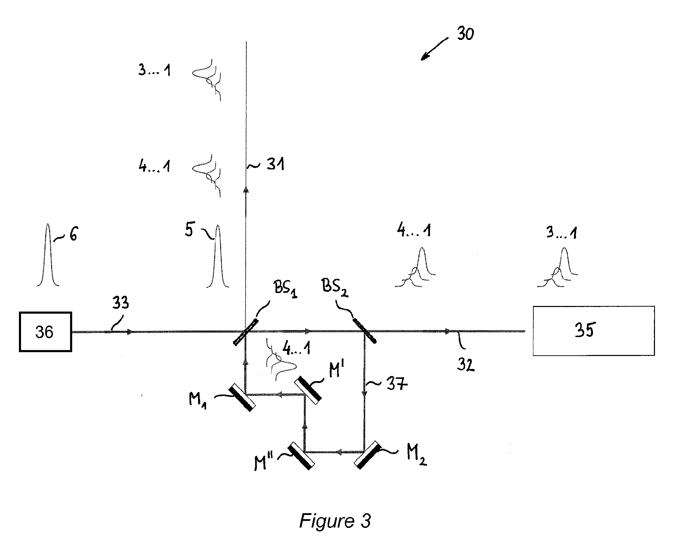

The schematic layout of the preferred embodiment of setup 30 according to the invention for measuring the carrier-envelope phase-drift of subsequent laser pulses shown in Figure 3 has a (preferentially pulsed) laser source 36 including a laser resonator, a detector 35 and a light path (not signed by a reference number) that spreads from the exit point of the laser source, as a starting point, to a sensing surface of detector 35, as an end point. The train of laser pulses 1, 2, 3, 4, 5, 6 generated by the laser source 36 is fed into this light path at the starting point and then travels along it in the directions of the arrows shown in Figure 3 until it reaches said end point. Beam splitter BS₁ is placed in the light path between the starting and the end points and has got an optionally chosen/set reflective/transmissive property. Beam splitter BS₁ reflects the incident laser pulses into a first arm 31 of the light path (in other words: reflection arm) depending on its reflective/transmissive property, or transmits them into a second arm 32 (in other words: transmission arm). Thus, in a given embodiment depending on the fact that into which arm the detector 35 is arranged, said light path extending from the starting point to the end point is formed by a light path section 33 extending from the starting point to the beam splitter BS₁ and either the first arm 31 or the second arm 32 of the light path.

Also a part of the light path of the setup 30 according to the invention is a resonator ring 37 that closes into itself, which joins to the light path at the beam splitter BS₁; the resonator ring 37 starts at beam splitter BS₁, leads through optical elements with preferably chosen light guiding properties and terminates at beam splitter BS₁. In general, the length of resonator ring 37 is chosen in such a way, that the ratio of the length of the laser oscillator (which defines the separation between subsequent pulses of a pulse train) and the length of the resonator ring 37 be a rational number in the form of n/m (where n and m are positive integers). Rings satisfying this condition are called resonant rings. In particular, the length of the resonator ring 37 is chosen in such a way, that its round-trip time be essentially either n times (m=1, n is positive integer) or 1/m times (n=1, m is positive integer) of the round-trip time of the laser resonator of the laser source. In other words, the length of the resonator ring 37 should be either the ratio or the product of the length of the laser resonator applied in the laser source 36 and an integer number. An especially preferred embodiment of the resonator ring is reached with the choice of n=m=1, that is, when the length of the laser resonator essentially equals to the length of the resonator ring 37.

Since in practice these conditions are usually not satisfied automatically, the length of resonator ring 37 can be varied by e.g. suitable optical elements within the resonator ring 37 and operating them by known ways (e.g. by tilting around certain axes or by moving them along certain axis/axes with desired amount and precision), that is, the length of the resonator ring 37 itself is tunable.

A preferred embodiment of the resonator ring 37 includes a secondary beam splitter BS₂, which is arranged after the beam splitter BS₁ in the direction of the propagating laser beam guided into the resonator ring 37 by the beam splitter BS₁, and also includes reflective elements, practically mirrors M₂, M", M' and M₁, coated by reflective layers on their front sides, where the laser beam incides at, and placed after beam splitter BS₂ in such geometrical setup that directs the light back to the beam splitter BS₁. Beam splitter BS₂ has an arbitrary chosen/set reflection/transmission property. Mirrors M" and M' play an essential role in the tuning of the length of resonator ring 37; if the satisfaction of above condition on the length of laser resonator of laser source 36 and length of resonator ring 37 is guaranteed in some certain way, the mirrors M" and M' of resonator ring 37 can be eliminated. Further optical elements (typically e.g. phase-shifting mirrors or pair(s) of prisms or any suitable combination of said elements) can also be arranged in the light resonator ring 37; their function is to diminish or to eliminate the phase shift due to spectral dispersion of the laser pulses entering the light resonator ring 37. Other, important characteristics/properties of beam splitter BS₂ and mirrors M₂, M", M' and M₁ used in the resonator ring 37 in accordance with the inventive concept are known by the person skilled in the art and, hence, not discussed here in more detail. Moreover, in the embodiment of the setup 30 shown in Figure 3, the resonator ring 37 is placed within the light path at the beam splitter BS₁ in such a way, that a segment thereof falling between the beam splitters BS₁ and BS₂ overlaps the respective segment of the second arm of light path 32.

In one of the preferable embodiments of setup 30 according to the invention, the resonator ring 37 is formed by the separately well-known Fabry-Perot interferometer.

The detector 35 is preferably meant to be an instrument capable of measuring intensity or energy. The intensity measuring device is practically a device capable of measuring light intensity, it is preferably a photodiode, a photodiode array, a photo detector, a CCD chip or a camera or any other similar instrument. The energy measuring device can be any light energy detector, which is capable of measuring the total/resultant energy of the incident laser pulse(s) on its sensing surface.

In one of the preferable embodiments of the setup 30 according to the invention, a device can be built in the path of the laser pulses right in front of the detector 35, which can resolve the laser pulses by wavelength (e.g. optical grating with preferably chosen groove density, spectrograph, etc.), or a wavelength-selective optical element, which can separate a certain wavelength component of the laser pulses. In the latter case, the detector 35 operates either in spectrally resolved modere or in the chosen wavelength/wavelength range only.

In what follows, the measurement procedure according to the invention will be discussed in details.

The first step of the method for measuring the carrier-envelope phase is to generate a train of laser pulses 1, 2, 3, 4, 5, 6 by laser source 36, which is fed into the light path 33 in the appropriate way. As we mentioned before, the time difference between the subsequent pulses is determined by the round-trip time of the laser resonator of the laser source 36. A fraction of the individual pulses (actually a part of the energy stored in their electric field) propagating in the light path 33 is reflected by beam splitter BS₁ into the light path 31, meanwhile the remainder of them is transmitted through the beam splitter BS₁ into the light path 32, where it reaches the beam splitter BS₂. The beam splitter BS₂ reflects certain part of the individual incoming pulses and so keeps a replica of incident pulses within the resonator ring 37, while it forwards the remaining part of the passing pulses into the light path 32. As a result, a fraction of laser pulses 1, 2, 3, 4, 5, 6 is stored in resonator ring 37, that is, a replica with decreasing energy of each entering pulse 1, 2, 3, 4, 5, 6 is stored in the resonator ring 37; e.g. the laser pulses 1, 2, 3, 4 are just leaving into the transmission arm, while one replica of the same pulses 1, 2, 3, 4 are still cycling in the resonator ring 37. Stored pulses 1, 2, 3, 4 are continuously fed back to beam splitter BS₁, which transmits certain part of them into the reflection arm, and reflects the remaining parts into the light path 32. That is, several laser pulses 1, 2, 3, 4 generated at different times will propagate in light path arm 31 beyond the beam splitter BS₁ and in the light path arm 32 beyond the beam splitter BS₂. However, the earlier a given pulse enters the resonator ring 37, the less energy it will have within the resonator ring 37 because of the number of full cycles it travels (i.e. due to the repeatedly performed beam splitting). If the carrier-envelope phase is varying in the laser pulse train consisting of the pulses 1, 2, 3, 4, 5, 6, the laser pulses 1, 2, 3, 4, 5, 6 with different carrier-envelope phases would also exist at the same time in the light path arm 31 after the beam splitter BS₁ and in the light path arm 32 after the beam splitter BS₂.

Generally speaking, if the ratio of the laser resonator's length and the resonator ring's length is essentially a rational number, that can be written in the form of n/m, the (j+k)-th element of the pulse train emitted by the laser source 36 can essentially coexist with the j-th (j is a positive integer) replica circulating in the resonator ring 37 of the I-th member of the pulse train in one of the light path arms 31, 32. Here, the variables k, I, m, n are positive integers and satisfy the relation of l·n=k·m. It should be mentioned that if m>1 holds, the laser pulses appear more frequently (m times) than the repetition rate of the laser source. Moreover, in light of the above it is also obvious that in practice n and m are small positive integers.

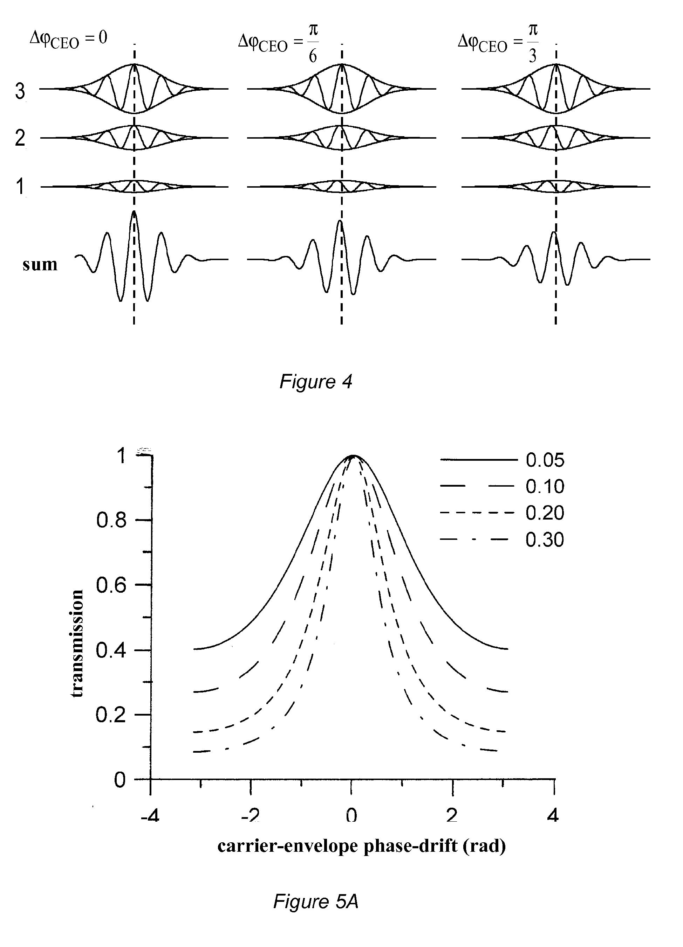

The laser pulses coupled out by the beam splitter BS₂ from the resonator ring 37 into the light path arm 32 will interfere constructively through their electric fields, that is the energy of the pulses propagating in the transmission arm will be maximal, if the carrier-envelope phases of the individual pulses are equal, in other words, the carrier-envelope phase-drift of the pulse train satisfies the condition Δϕ_{CEO}=0+k·2π (where k is an integer) as it is shown by the laser pulses 1 to 3 in the first coloumn of Figure 4. The more the phase-drift differs from zero (aside from a periodicity of 2π), in accordance with the second and third columns of Figure 4, the less pulse energy appears at the place of outcoupling. Consequently, by measuring the resultant intensity of the outcoupled pulses in the transmission arm by the detector 35 shown in Figure 3, data related to the rate of change of the carrier-envelope phase can be obtained, which - if desired - can be used for controlling the optical elements for the stabilization of the carrier-envelope phase of the laser pulse train.

In an another embodiment of the method according to the invention, the laser pulses 1, 2, 3, 4, 5, 6 coupled out from the resonator ring 37 into the light path arm 32 by means of the beam splitter BS₁ can be also used for measuring the carrier-envelope phase-drift of the pulse train fed into the light path segment 33. For this, the detector 35 should be arranged in the reflection arm and the measurement should be performed there. However, the intensity measured in this second setup shows an opposite behaviour compared to the intensity measurement for the setup shown in Figure 3 (that is, when the measurement was performed in the transmission arm); in accordance to the law of energy conservation, the measured resultant intensity has a minimum at carrier-envelope phase-drifts of Δϕ_{CEO}=0+k-2π (where k is integer) and increases for non-zero phase-drifts. The quantitative relationship between the measured intensity value or the change in intensity and the appropriate carrier-envelope phase-drift (Δϕ_{CEO}) is determined through a calibration procedure to be discussed later.

It is noted that as the energy of the individual laser pulses within the resonator ring 37 is decreasing from round to round traveled (depending on the reflectivity of the beam splitters BS₁ and BS₂), their contribution to the measured resultant intensity becomes more and more negligible. To put this in another way, the number of pulses currently being present in the resonator ring 37 can be controlled through the reflectivity of the beam splitters BS₁ and BS₂, and eventually the practical values of the positive integers n and m can be set.

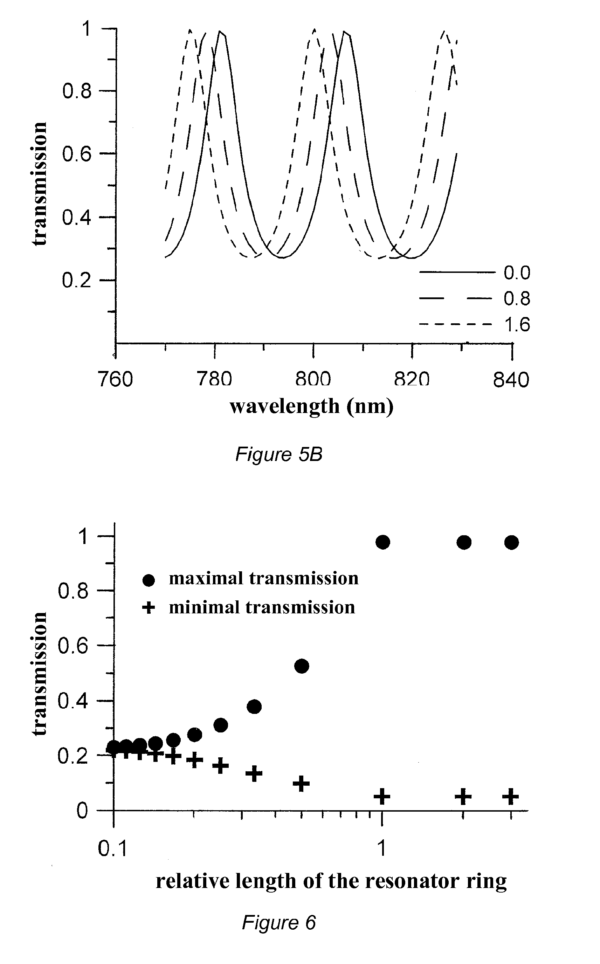

If the intensity measured in either the transmission or the reflection arm is kept at a certain level by means of the optical elements for phase stabilization, the pulse-to-pulse carrier-envelope phase-drift will be kept constant, that allows for high precision optical frequency metrology. It would lead to the same results, if the round-trip time of the resonator ring 37 was varied (or detuned) slightly compared to the time difference between the subsequent pulses and the retrieved maxima and minima of the spectral intensity were kept in place, as it is shown by Figure 5B discussed later.

If the constant phase-drift is kept zero, the stability of the absolute carrier-envelope phase of the pulse train can be achieved. It gives opportunity for further observation of processes with a duration time of several hundred attoseconds (∼10⁻¹⁶ s), and furthermore, execution of exceedingly efficient and extremely reproducible high harmonic and X-ray pulse generation experiments.

It should be also noted that the accuracy of above discussed experimental method can be greatly improved if the measurement of the resultant intensity of the laser pulses coupled out of the resonator ring 37 (namely the intensity of the superposition of the electric fields of the interfering individual pulses) is performed by means of a non-linear process, preferably a higher order (e.g. second order) harmonic generation. This can be achieved by placing an optical element with definite non-linear properties in front of the detector 35, in accordance with the propagation direction of the laser beam into the light path arm 31 or 32 chosen for the measurement. Due to the losses, said second and higher order harmonic generation is limited by the intensity of the laser beam to be measured. Furthermore, in the case of a detuned resonator ring 37 (namely, when the previously mentioned condition for the relative lengths of the laser resonator and those of the resonator ring 37 is not exactly satisfied and thus the laser pulses emitted by the laser resonator and the laser pulses coming back from the resonator ring 37 are slightly shifted to each other in time - as it occurs quite frequently in practice), the accuracy of the experimental method according to the invention can be increased in such a way that the resultant intensity of the outcoupled laser pulses is measured only at a certain predefined wavelength after completing the setup 30 by the above discussed wavelength selective optical elements.

The results underlying the method according to the invention are illustrated in Figures 5A, 5B and 6 for a measurement performed in the light path arm 32 (transmission arm). To achieve this, laser pulses 1, 2, 3, 4, 5, 6 having a repetition rate of 80 MHz, a central wavelength of 800 nm and a duration of 21 fs generated by a mode-locked, Kerr-lens based Ti:S laser resonator were fed into the setup 30 according to Figure 3. The reflectivity of the beam splitters BS₁ and BS₂ are set to 22.4% (feedback, finesse = 0.05), 31.6% (finesse = 0.10), 44.7% (finesse = 0.20) and 54.8% (finesse = 0.30), respectively. Figure 5A illustrates the light transmission property of the resonator ring 37 versus the carrier-envelope phase-drift. The curves drawn with different line styles refer to the different feedback values (finesse) for a resonant and dispersionless resonator ring 37. As it can be seen in the figure, an increase of the phase-drift occurs along with a decrease of the transmission.

Figure 5B shows the transmission of the resonator ring 37 as a function of the wavelength for a slightly detuned (namely Δτ = 0.0833 ps) resonator ring 37. The different curves drawn with different line styles represent different values of the carrier-envelope phase-drift.

Figure 6 shows the minimum and the maximum value of the transmission of the resonator ring 37 as a function of the relative length of the resonator ring 37 (that is, expressed as the length of the laser resonator). As it can be seen, the length of the resonator ring 37 can be shorter than the length of the laser resonator, that is, it can be an integer fraction of the laser resonator. However, in the case when e.g. the length of the resonator ring 37 is the n-th part (where n is positive integer) of the laser resonator, the condition of interference inside of the resonator ring 37 is satisfied only for each of the n-th pulses. Because of this, the dynamic range, that is, the difference between the maximal and minimal transmission at the output keeps decreasing, namely the accuracy of the measurement of the given carrier-envelope phase becomes less precise. The two great advantages of the usage of a resonator ring 37 that is shorter than the laser resonator are, however, that the ring is significantly more stabile mechanically and the beam expansion due to the natural divergence of the laser beam is much less.

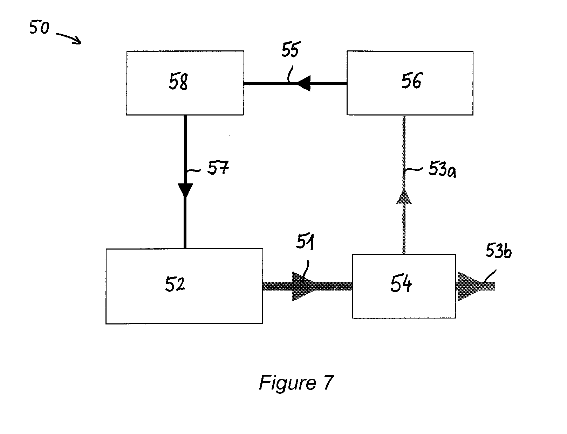

Figure 7 shows the schematic layout of a possible embodiment of the system 50 based on the inventive concept which is capable of stabilization of the carrier-envelope phase of a laser pulse train. The considered system 50 has a laser beam 51 generated by laser (system) 52, an individually known beam splitter 54, which divides the laser beam 51 into parts 53a and 53b with predefined intensities, the setup 56, which subjects the part 53a of laser beam 51 to the above particularly discussed measurement method, and also a control unit 58 receiving the electronic signal 55 (corresponding to transmission values measured by e.g. the detector of above described setup 56) at the output of setup 56. The control unit 58 is preferably provided by a computer. The control unit 58 controls the laser (system) 52 by the electronic signal 57 and makes it to generate a stabilized beam 51 of laser pulses in sense of carrier-envelope phase. The controlling is based on the information (intensity, transmission) originated from the 53a fraction of the laser beam 51 in the setup 56, which information is realized by the electronic signal 55.

The explicit controlling is performed by the control unit 58 throughout the electronic signal 57, usually by varying either the intensity of the pumping laser beam or the position of the resonator mirror of the laser resonator, based on by the correct measured intensity (transmission) signal coming in the control unit 58.

To correlate the measured intensity values and the pulse-to-pulse drift _{CEO} of carrier envelope phase, the setup 56 is subjected to an appropriate calibration step. In the frame of this, the respective values of the (transmitted or reflected) intensity (see e.g. the transmission values shown in Figure 5A) and _{CEO}, along with their fitted characteristics are to be determined. The corresponding intensity value is determined by the setup 56 as it was described above. The carrier-envelope phase-drift is obtained by a nowadays standard method of phase-drift measurement, e.g. by means of an "f-to-2f" method that has been particularly discussed in relation to Figures 2A to 2C. To do this, the laser beam of the laser resonator is divided into two portions. Then a part thereof is directed into a standard (e.g. "f-to-2f" based) measuring device, while the other part is guided into the resonator ring of the setup 56. The phase drift _{CEO} is being varied in the laser resonator in accordance with its specifications, while the change itself is being measured by the aformentioned standard device. The intensity variation of the pulses exiting the resonator ring is being detected simultaneously. The measured value of _{CEO} is then assigned to the measured value of the intensity variation. It should be noted, that for the present calibration step instead of the "f-to-2f" type methods/devices any other phase-drift measuring methods/devices can be equally applied.

Thus, the setup 56 becomes calibrated. The calibration holds as long as no optical element is replaced within the resonator or the wavelength range of the laser resonator falls within the spectral range of the setup 56.

The part 53b of the laser beam 51 exiting the beam splitter 54 is a laser beam coupled out for further applications that is formed by a carrier-envelope phase stabilized pulse train in accordance with the inventive method.

The bandwidth of the individual laser pulses plays no role at all in the method according to the inventive concept or in the case of a setup for accomplishing the method. Therefore, the method and the setup according to the invention can equally be applied for laser light sources of narrow bandwidth and/or of low intensity.

In addition it should be noted that although the experimental method according to the invention and the setup for accomplishing the method have been introduced in relation to the application of a resonator ring realized with two beam splitters, a resonator ring employing different number (and also type) of beam splitters can be also made use of within the method and setup according to the invention, as it is obvious for a person skilled in the relevant art. For example, the resonator ring can be equally formed by a diffraction grating, as beam splitter, and a properly connected optical fiber with appropriate light guiding properties.

Moreover, in view of the above it is clear that the method and the setup according to the invention can be preferentially applied in every area of technology, where laser pulse trains stabilized in terms of the carrier-envelope phase are required for some reason.

## Claims

1. A method for measuring the carrier-envelope phase-drift of laser pulses generated periodically by a laser source, **characterized by** the steps of
- feeding a laser pulse train consisting of at least two pulses (1, 2, 3, 4, 5, 6) into a light path, said light path extending between a starting point and an end point along the direction from the starting point to the end point;
- inserting a resonator ring (37) into the light path at a first point of the light path, said first point being different from the end point, said resonator ring (37) closing into itself at said first point, wherein the length of the resonator ring (37) is essentially chosen to be the product of the separation between the individual laser pulses (1, 2, 3, 4, 5, 6) forming the laser pulse train and a rational number constructed in the form of n/m (n, m are positive integers);
- directing, at the first point, predefined fractions of the laser pulses (1, 2, 3, 4, 5, 6) reaching said first point by division of the laser pulses (1, 2, 3, 4, 5, 6) into the resonator ring (37) and guiding them along the resonator ring (37);
- directing remaining fractions of the laser pulses (1, 2, 3, 4, 5, 6) divided at said first point into a segment of the light path located beyond the first point and guiding them along the light path to the end point;
- arranging a detector (35) at the end point and, by detecting the superposition of electric fields of the fractions of laser pulses (1, 2, 3, 4, 5, 6) guided to the end point, determining a physical quantity peculiar to the sum of superimposed laser pulses (1, 2, 3, 4, 5, 6) by said detector;
- determining a value of pulse-to-pulse carrier-envelope phase-drift for subsequent laser pulses (1, 2, 3, 4, 5, 6) from the variation of the physical quantity thus obtained.

2. The method according to Claim 1, further comprising the steps of
- guiding the resonator ring (37) through a second point of the light path, said second point falling between the first point and the end point and being different from both the first point and the end point, wherein a segment of the resonator ring (37) located between the first and the second points overlaps a segment of the light path extending between the first and the second points;
- dividing, at the second point, laser pulses (1, 2, 3, 4, 5, 6) reaching said second point, thereby keeping predefined fractions of the laser pulses (1, 2, 3, 4, 5, 6) in the resonator ring (37) and directing remainder fractions thereof into the segment of the light path located beyond the second point and then guiding them along the light path to the end point; and
- directing, at the first point, predefined fractions of the laser pulses (1, 2, 3, 4, 5, 6) reaching the first point to a point located outside of said light path and determining the physical quantity at this point.

3. The method according to Claim 1 or 2, wherein the carrier-envelope phase-drift of subsequently generated laser pulses (1, 2, 3, 4, 5, 6) is stabilized by employing the value of the obtained physical quantity as a control parameter to control the laser source (36) of the laser pulses (1, 2, 3, 4, 5, 6).

4. The method according to Claim 1 or 2, wherein the carrier-envelope absolute phase of subsequently generated laser pulses (1, 2, 3, 4, 5, 6) is stabilized by employing the value of the obtained physical quantity as a control parameter to control the laser source (36) of the laser pulses (1, 2, 3, 4, 5, 6).

5. The method according to any of Claims 1 to 4, further comprising performing a calibration step to determine a relation between respective values of the variation of the obtained physical quantity and the carrier-envelope phase-drift, comprising
- dividing, before reaching the first point, the laser pulses fed into the light path into two parts;
- measuring the variation of said physical quantity by directing a part of the laser pulses divided into two parts into the resonator ring (37);
- subjecting the other part of the laser pulses divided into two parts to a measurement for determining carrier-envelope phase-drift by means of a per se known technique;
- correlating the values obtained by the measurements performed separately on the parts of the laser pulses divided into two parts before reaching the first point with one another.

6. The method according to Claim 5, wherein an "f-to-2f" type technique is used for determining carrier-envelope phase-drift of the laser pulses.

7. The method according to any of Claims 1 to 6, wherein the laser pulses (1, 2, 3, 4, 5, 6) guided to the end point are subjected to a spectral resolution before they reach the end point and the obtained physical quantity peculiar to the sum of superimposed laser pulses (1, 2, 3, 4, 5, 6) is measured at a given wavelength or in a given wavelength range.

8. The method according to any of Claims 1 to 7, wherein the laser pulses (1, 2, 3, 4, 5, 6) guided to the end point are subjected to non-linear optical conversion, preferably to higher order harmonic generation, before they reach the end point and the obtained physical quantity peculiar to the sum of superimposed laser pulses (1, 2, 3, 4, 5, 6) is determined through studying the thus obtained higher order harmonics.

9. The method according to any of Claims 1 to 8, wherein the phase shift of laser pulses (1, 2, 3, 4, 5, 6) due to spectral dispersion in the resonator ring (37) is compensated.

10. The method according to any of Claims 1 to 9, wherein the physical quantity peculiar to the sum of superimposed laser pulses (1, 2, 3, 4, 5, 6) is either the intensity or the energy of the superposition of the electric fields of the laser pulses (1, 2, 3, 4, 5, 6).

11. The method according to any of Claims 1 to 10, wherein the laser pulses (1, 2, 3, 4, 5, 6) are generated by a laser source (36) operated at an arbitrary central wavelength, with arbitrary bandwidth and with arbitrary light intensity.

12. A setup for measuring the carrier-envelope phase-drift of laser pulses generated periodically by a laser source, **characterized in that** it comprises
- a light path between a starting point and an end point, said light path extending from the starting point towards the end point;
- a laser source (36) arranged at the starting point of the light path, said laser source (36) having a laser resonator generating laser pulses with a given separation therebetween;
- an optical element with a beam splitting ability arranged at the first point of the light path, said first point being different from the end point;
- a closed resonator ring (37) inserted into the light path and closing into itself at said first point, said resonator ring (37) having essentially a length chosen to be the product of the separation between the individual laser pulses (1, 2, 3, 4, 5, 6) generated subsequently by the laser resonator and a rational number constructed in the form of n/m (n, m are positive integers);
- a detector (35) comprising a sensing surface and an output, said detector (35) being arranged at the end point of the light path and producing on its output, upon detecting laser pulses present on its sensing surface, an electronic signal representing a physical quantity peculiar to the superposition of the electric fields of the laser pulses.

13. The setup according to Claim 12, further comprising a second optical element with a beam splitting ability arranged at a second point of the light path, said second point differing from both the end point and the first point, wherein the resonator ring (37) passes through said second point of the light path and a segment of the resonator ring (37) located between the first and the second points overlaps a segment of the light path extending between the first and the second points.

14. The setup according to Claim 12 or 13, wherein a means for performing resolution with respect to wavelength is arranged in the light path after the first or the second point thereof but before the end point.

15. The setup according to any of Claims 12 to 14, wherein a means for performing non-linear conversion is arranged in the light path after the first or the second point thereof but before the end point.

16. The setup according to any of Claims 12 to 15, wherein at least one optical element for compensating the phase shift of laser pulses due to spectral dispersion is arranged in the resonator ring (37).

17. The setup according to any of Claims 12 to 16, wherein the resonator ring (37) is a Fabry-Perot interferometer.

18. The setup according to any of Claims 12 to 17, wherein at least one of the conditions n=1 and m=1 holds for the length of the resonator ring (37).
